## Europäisches Patentamt
## European Patent Office
## Office européen des brevets

(19)

(11) Veröffentlichungsnummer : **0 150 234**
**B1**

(12)
# EUROPÄISCHE PATENTSCHRIFT

(45) Veröffentlichungstag der Patentschrift :
09.08.89

(51) Int. Cl.⁴ : **G 01 T   1/18**

(21) Anmeldenummer : **84100826.1**

(22) Anmeldetag : **26.01.84**

(54) Verfahren zum Überwachen von UV-Quellen und Vorrichtung zur Ausführung des Verfahrens.

(43) Veröffentlichungstag der Anmeldung :
**07.08.85 Patentblatt 85/32**

(45) Bekanntmachung des Hinweises auf die Patenterteilung : **09.08.89 Patentblatt 89/32**

(84) Benannte Vertragsstaaten :
**CH DE FR GB LI NL**

(56) Entgegenhaltungen :
**DE—A— 1 512 472**
**DE—A— 2 828 492**
**FR—A— 1 066 626**
**US—A— 4 047 038**

(73) Patentinhaber : **GTE Licht GmbH**
**Graf-Zeppelin-Strasse 9-11**
**D-8520 Erlangen 23 (DE)**

(72) Erfinder : **Loy, H.M.**
**Germersheimer Strasse 43**
**D-8500 Nürnberg (DE)**

(74) Vertreter : **Lemke, Jörg-Michael, Dipl.-Ing.**
**Wolframstrasse 9**
**D-8900 Augsburg (DE)**

Jouve, 18, rue St-Denis, 75001 Paris, France

**Beschreibung**

Die Erfindung betrifft ein Verfahren zum Überwachen von UV-Quellen mit einer gasgefüllten UV-Röhre, deren Betriebsspannung eine Gleichspannung ist, die an einem elektronischen Schaltglied anliegt, welches zur Erzielung einer Aus-Zeit und damit einer Löschung der UV-Röhre periodisch durch eine Impulsfolge von rechteckigen Impulsen getastet und dadurch kurzgeschlossen wird, wie es aus der US-A-4 047 038 hervorgeht, sowie eine Vorrichtung zur Ausführung dieses Verfahrens.

Beim Gegenstand der genannten Druckschrift liefert ein freilaufender, astabiler Multivibrator eine symmetrische Impulsfolge im Tastverhältnis 0,5, was bedeutet, daß die UV-Röhre nachteiligerweise die halbe Zeit unempfindlich ist. Die positive Anodenspannung der UV-Röhre wird durch Polaritätsumkehr während der Impulspause negativ (minus 60 V), um ein Durchzünden der Röhre infolge der hohen Betriebsspannung der bekannten Vorrichtung zu verhindern.

Die negative Spannung wird dabei in aufwendiger Weise durch einen Ohmschen Spannungsteiler erzeugt. Zu diesem Aufwand gesellt sich die ebenfalls aufwendige Gewinnung des Ausgangssignals, da ein Zünden der UV-Röhre einen negativen Impuls von hohem Potential auf der Anodenseite liefert, so daß eine galvanische Trennung mittels eines Kondensators nötig ist. Die Amplitudenbegrenzung erfolgt mittels eines Dioden-Clippers, das Ausgangssignal ist hochohmig. Ersichtlich ist die Zahl der erforderlichen Komponenten der bekannten Vorrichtung sehr hoch, zumal jedes verwendete NAND- und NOT-Gatter zusätzlich einige Transistoren, Dioden und Widerstände enthält.

Die der Erfindung zugrunde liegende Aufgabe wird darin gesehen, ein Verfahren nebst Vorrichtung der eingangs genannten Art zu schaffen, die trotz erhöhter Empfindlichkeit einfacher zu verwirklichen sind.

Diese Aufgabe wird verfahrensmäßig dadurch gelöst, daß während der Aus-Zeit eine positive Restspannung an der Anode aufrechterhalten wird. Diese positive Restspannung ermöglicht es, die Aus-Zeit zu reduzieren, da die Restspannung dafür sorgt, daß die Erholungszeit der UV-Röhre herabgesetzt wird. Durch die positive Restspannung erfolgt nämlich der Entionisierungsvorgang schneller. Da nun einmal die Aus-Zeit notwendigerweise größer sein muß als die Erholungszeit der Röhre, läßt sich die Aus-Zeit und damit diejenige Zeit, während der die UV-Röhre unempfindlich ist, durch eine Verringerung der Erholungszeit ebenfalls verringern.

Gemäß einer bevorzugten Ausgestaltung des Verfahrens wird als Restspannung eine Spannung von + 50 V gewählt.

Vorrichtungsgemäß wird die genannte Aufgabe bei Vorhandensein einer gasgefüllten UV-Röhre, einer Gleichspannungsquelle für die Röhre, an der ein elektronisches Schaltglied zur Erzielung einer Aus-Zeit und damit der Löschung der Röhre anliegt, und einer Impulsquelle zum periodischen Tasten und Kurzschließen des Schaltglieds durch eine Impulsfolge von rechteckigen Impulsen, dadurch gelöst, daß zur Aufrechterhaltung der positiven Restspannung eine Zener-Diode dem elektronischen Schaltglied in Serie vorgeschaltet ist.

Auf diese Weise ergibt sich eine sehr einfache, unaufwendige, nur wenige Elemente enthaltende, zuverlässige, empfindliche Schaltung. Dabei läßt sich ein Tastverhältnis nahe 1 verwenden, wobei während der gesamten Einschaltdauer die maximale, konstante Empfindlichkeit auftritt. Die positive Restspannung beschleunigt die Ladungsträger im elektrischen Feld während der Aus-Zeit und ermöglicht dadurch eine schnellere Rekombination, was in der oben erläuterten Weise eine geringere Erholungszeit ergibt und dadurch eine Verringerung der Aus-Zeit ermöglicht.

Die Erfindung wird beispielhaft anhand der Zeichnung näher beschrieben, in der zeigen

Fig. 1 ein Schaltbild einer erfindungsgemäßen Vorrichtung und

Fig. 2 ein Diagramm zur Erläuterung des Schaltbildes nach Fig. 1.

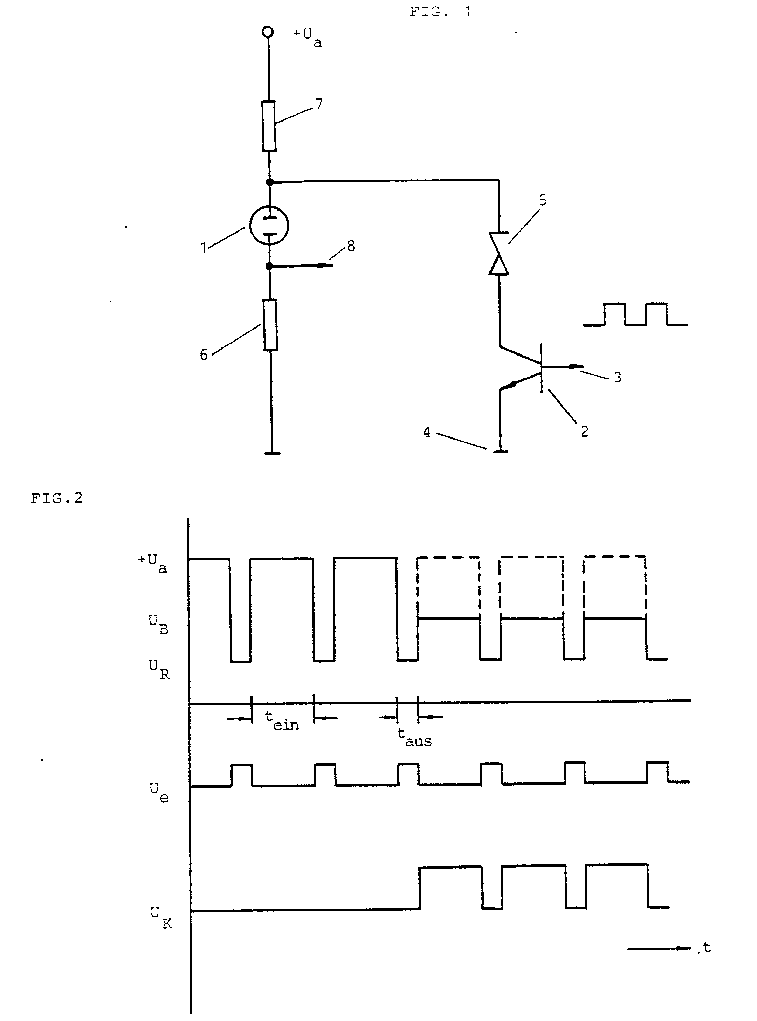

Gemäß Fig. 1 liegt parallel zu einer UV-Röhre 1 ein Schalttransistor 2, an dessen Basisanschluß 3 eine Rechteckspannung angelegt wird. Der Emitter des Schalttransistors liegt an Erde 4. In Reihe mit dem Schalttransistor ist eine Zener-Diode 5 geschaltet. 6 ist ein Kathodenwiderstand der Röhre und 7 ein Anodenstrombegrenzungswiderstand.

Die Arbeitsweise ist gemäß Fig. 2 wie folgt :

Ohne Ansteuerung sperrt der Transistor. Die volle Spannung $+ U_a$ liegt an der UV-Röhre 1. Durch UV-Bestrahlung zündet die Röhre und es fließt ein Anodenstrom, der durch den Widerstand 7 begrenzt wird. Der Anodenstrom erzeugt am Kathodenwiderstand 6 einen Spannungsabfall und an diesem Kathodenwiderstand wird am Anschluß 8 das Ausgangssignal $U_k$ abgenommen. Beim Ansteuern des Transistors 2 mit der Rechteckspannung $U_e$ leitet dieser und schließt die Röhre 1 kurz. Dadurch löscht die Gasentladung. Um eine schnelle Rekombination der Ladungsträger im Plasma zu ermöglichen, wird die Anodenspannung nicht völlig kurzgeschlossen, sondern eine gewisse Restspannung $U_R$ aufrechterhalten, welche die Ladungsträger im Elektrodenfeld beschleunigt. Diese positive Restspannung wird auf einfache Weise durch die Zener-Diode 5 erzeugt, z. B. 50 V. Da die Restspannung kleiner gewählt ist als die Brennspannung der Röhre, findet ein Löschen statt.

Als Schalttransistor kann ein npn-Transistor hoher Spannungsfestigkeit verwendet werden, ebenfalls ein C-MOS-Transistor.

Der Schalttransistor kann in Serie oder parallel geschaltet werden.

Es kann auch ein freischwingender astabiler Multivibrator mit zwei Transistoren verwendet werden.

Statt eines Transistors kann auch eine Elektronenröhre, eine Kaltkathodenröhre oder ein Thyristor verwendet werden.

Die erfindungsgemäße Ausbildung führt zu einer möglichen Stromflußzeit von fast 100 %. Der Photostrom ist

$$I_{ph} = \frac{U_B}{R_a + R_k},$$

worin $U_B$ der Spannungsabfall an der UV-Röhre, $R_a$ und $R_k$ die Werte des Anoden- und Kathodenwiderstands sind.

Durch Wahl des Tastverhältnisses soll die Aus-Zeit $t_{aus}$ klein gehalten werden. Eine mögliche Stromflußzeit von fast 100 % ergibt sich nämlich nur bei einem Tastverhältnis nahe 1. Während der gesamten Einschaltdauer ($t_{ein}$) tritt die maximale, konstante Empfindlichkeit auf. Durch Wahl einer höheren Frequenz der Rechteckspannung kann die Informationsdichte erhöht werden und die SystemZeitkonstante verringert werden, womit die UV-Röhre als Explosionsschutz verwendet werden kann. Durch Verbleiben der Restspannung $U_R$ während der Aus-Zeit $t_{aus}$ wird die Erholungszeit verringert, und zwar durch Beschleunigung der Ladungsträger im elektrischen Feld und schnellere Rekombination. Dadurch wird wiederum die mögliche Aus-Zeit $t_{aus}$ verringert.

Bei den durch die UV-Röhre überwachten UV-Quellen kann es sich um dauernde Quellen, wie die Flamme eines Gasbrenners oder Ölbrenners, oder um zeitweilige UV-Quellen, wie Explosionsstrahlung, Schaltfunken etc. handeln.

## Patentansprüche

1. Verfahren zum Überwachen von UV-Quellen mit einer gasgefüllten UV-Röhre, deren Betriebsspannung eine Gleichspannung ist, die an einem elektronischen Schaltglied anliegt, welches zur Erzielung einer Aus-Zeit und damit einer Löschung der UV-Röhre periodisch durch eine Impulsfolge von rechteckigen Impulsen getastet und dadurch kurzgeschlossen wird, dadurch gekennzeichnet, daß während der Aus-Zeit eine positive Restspannung an der Anode aufrechterhalten wird.

2. Verfahren nach Anspruch 1, dadurch gekennzeichnet, daß als Restspannung + 50 V gewählt werden.

3. Vorrichtung zur Ausführung des Verfahrens nach den Ansprüchen 1 oder 2 mit einer gasgefüllten UV-Röhre, einer Gleichspannungsquelle für die Röhre, an der ein elektronisches Schaltglied zur Erzielung einer Aus-Zeit und damit der Löschung der Röhre anliegt, und einer Impulsquelle zum periodischen Tasten und Kurzschließen des Schaltglieds durch eine Impulsfolge von rechteckigen Impulsen, dadurch gekennzeichnet, daß zur Aufrechterhaltung der positiven Restspannung eine Zener-Diode (5) dem elektronischen Schaltglied (2, 3, 4) in Serie vorgeschaltet ist.

## Claims

1. Process for monitoring UV sources, having a gas-filled UV tube whereof the operating voltage is a DC voltage across an electronic switching element which, to produce an off time and thus an extinction of the UV tube, has periodically applied to it a pulse sequence of square pulses and is thus short-circuited, characterized in that during the off time a positive residual voltage is maintained at the anode.

2. Process according to Claim 1, characterized in that + 50 V is selected as the residual voltage.

3. Apparatus for carrying out the process according to Claims 1 or 2, having a gas-filled UV tube, a DC voltage source for the tube across which there is an electronic switching element for producing an off time and thus extinction of the tube, and a pulse source for periodically applying pulses to and shortcircuiting the switching element by a pulse sequence of square pulses, characterized in that to maintain the positive residual voltage a Zener diode (5) is connected in series in front of the electronic switching element (2, 3, 4).

## Revendications

1. Procédé de surveillance de sources de rayonnement ultraviolet avec un tube à ultra-violets à gaz, dont la tension de fonctionnement est une tension continue, qui est appliquée à un organe de commutation électronique, qui est périodiquement excité au moyen d'une série d'impulsions rectangulaires et de ce fait mis en court-circuit pour l'obtention d'un temps hors-circuit et donc d'une extinction du tube a ultra-violets, caractérisé par le fait qu'une tension résiduelle positive est maintenue à l'anode pendant le temps de mise hors-circuit.

2. Procédé selon la revendication 1, caractérisé par le fait que l'on a choisi comme tension résiduelle + 50 V.

3. Dispositif pour la mise en oeuvre du procédé selon les revendications 1 ou 2, avec un tube à ultra-violets à gaz, une source de tension continue pour le tube, contre laquelle se trouve un organe de commutation électronique pour obtenir un temps de mise hors-circuit et donc l'extinction du tube, et une source d'impulsions pour l'excitation et la mise en court-circuit périodique de l'organe de commutation au moyen d'une série d'impulsions rectangulaires, caractérisé par le fait qu'une diode Zener (5) est montée en série avant l'organe de commutation électronique (2, 3, 4) pour le maintien de la tension résiduelle positive.

FIG. 1

FIG.2

1